# EUROPÄISCHE PATENTSCHRIFT

(11) **EP 3 894 626 B1**
(45) Veröffentlichungstag und Bekanntmachung des Hinweises auf die Patenterteilung: **01.03.2023**
(21) Anmeldenummer: 19829437.3
(22) Anmeldetag: 11.12.2019
(51) Int. Cl.: D21H 11/00, B01D 39/16, B65D 85/804, B65D 85/808, D21H 27/00, D21H 27/10

(54) **HEISSEXTRAKTIONSPAPIER**
HOT EXTRACTION PAPER
PAPIER POUR L'EXTRACTION À CHAUD

(30) Priorität: 14.12.2018 AT 3742018
(43) Veröffentlichungstag der Anmeldung: 20.10.2021
(73) Patentinhaber: Mondi AG, 1030 Wien (AT)
(72) Erfinder: SCHWAIGER, Elisabeth, 9431 St. Stefan (AT); JÖBSTL, Franz, 9431 St.Stefan (AT); KAINZ, Reinhard, 9400 Wolfsberg (AT)
(74) Vertreter: Cunow, Gerda
(86) Internationale Anmeldenummer: PCT/EP2019/084568
(87) Internationale Veröffentlichungsnummer: WO 2020/120535

(56) Entgegenhaltungen:
- EP-A1- 0 422 898
- WO-A1-2017/063680
- US-A1- 2016 073 689

## Beschreibung

Die vorliegende Erfindung bezieht sich auf ein Heißextraktionspapier bestehend im Wesentlichen aus Zellulose sowie aus für die Zelluloseherstellung unbedingt erforderlichen Fabrikationshilfsmitteln, wie pH-Wert Einstellmittel basierend auf Säuren und/oder Basen.

Heißextraktionspapiere, die als Kaffeefilter, Teefilter oder für andere Einsatzzwecke verwendet werden, müssen insbesondere, wenn sie im Lebensmittelbereich eingesetzt werden, bestimmten Anforderungen genügen. Nicht nur der eingesetzte Rohstoff, das sind im vorliegenden Fall die Holzschnitzel bzw. die Zellulose, sondern auch die Zuschlagstoffe sind exakt normiert und dürfen nur aus ganz wenigen bestimmten Substanzen gewählt werden.

Je nach gewähltem Einsatzzweck sind hierbei die Listen der Zuschlagstoffe unterschiedlich und insbesondere ist es erforderlich, dass nach einer Extraktion mit heißem Wasser der Gesamttrockenrückstand des Extrakts eine Menge von 10 mg/dm² nicht übersteigt und insbesondere muss auf üblicherweise bei der Herstellung von Papier verwendete Zuschlagstoffe weitgehend verzichtet werden.

In diesem Zusammenhang hat sich herausgestellt, dass die Anforderungen je nach nachfolgendem Einsatzzweck unterschiedlich sind und dass Papiere, die beispielsweise für die Teebereitung geeignet sind, als Kochbeutel nicht eingesetzt werden können.

Allerdings sind in der Technik neben den herkömmlichen Kaffee- und Teefiltern auch eine Mehrzahl von Spezialpapieren bekannt, welche beispielsweise für die Herstellung von Trinkbechern, in welchen heißer Kaffee bzw. heißer Tee oder Suppe vertrieben werden können, eingesetzt werden können bzw. dürfen. So ist beispielsweise aus der EP 1 985 437 A1 ein Verfahren bekannt geworden, mit welchem Papier zu Trinkbechern und dgl. verarbeitet wird, welches Papier unmittelbar nach seinem Formen im Lebensmittelberreich beispielsweise für heißen Kaffee oder heißen Tee eingesetzt werden kann.

Auch die EP 1 343 629 B1 beschreibt einen Papierbehälter, welcher aus einem stark streckbaren Kraftpapier gefertigt ist, und dessen Wand einen sich einwärts oder auswärts erstreckenden Abschnitt aufweist. Die hierin beschriebenen Papiere sind Spezialpapiere, welche für die Ausbildung von Behältern geeignet sind, welche unmittelbar beispielsweise ein Heißgetränk aufnehmen können und mit welchen der Käufer sich nicht verletzten kann, d.h. die auch eine gewisse Isolationswirkung besitzen.

Aus der WO 2018/002223 A1 ist ein Portionsbehälter für extrahierbare Substanzen zur Herstellung eines Getränks bekannt geworden, welcher Behälter einerseits aromadicht ausgebildet ist und andererseits biologisch abbaubar ist.

Die WO 2017/144009 A1 beschreibt ein zusammengesetztes Material enthaltend Zellulose und wenigstens mikrofibrillierte oder nanofibrillierte Zellulose sowie aus diesem Material hergestellte Produkte.

Aus der EP 2 374 930 A1 ist ein Verfahren zur Herstellung eines Basispapiers sowie das Basispapier beschrieben, welches wenigstens Zellulose aus Stroh sowie Industriezellulose enthält, zur Herstellung von Schreibpapier oder dgl.

Neben herkömmlichen Kaffeefiltern wird in letzter Zeit die Nachfrage nach Kapseln, in welche der zu brühende Kaffee enthalten ist, immer größer, da Maschinen, die derartige Kapseln aufnehmen und damit Kaffee oder Tee bereiten können, nicht nur im industriellen Markt, sondern insbesondere auch im Privathaushalten vermehrt zum Einsatz gelangen. Bei Einsatz von derartigen Maschinen fällt eine übermäßig große Anzahl von gebrauchten Kunststoffkapseln oder Metallkapseln bzw. Kapseln aus beiden Materialien an, welche gegenwärtig zum größten Teil entsorgt werden bzw. als Sondermüll betrachtet werden. Kunststoff soll aufgrund der immer mehr überhand nehmenden Problematik von Kunststoffabfällen, die an den unzugänglichsten Orten, wie mitten auf dem Ozean gefunden werden, so entsorgt werden, dass er wiederverwertet wird und somit die größer werdende Problematik soweit wie möglich verringert wird. Metallkapseln, insbesondere Aluminiumkapseln sind extrem teuer und bedürfen eines hohen Energieaufwands bei ihrer Herstellung, so dass ein Erfordernis nach einer neuen Art von Behältern für mit Kapseln arbeitenden Kaffeemaschinen besteht, mit welchem mit Kaffee gefüllten Kapseln Kaffee gebrüht werden kann, ohne dass die verbrauchten Kapseln einer aufwendigen Aufarbeitung unterzogen werden müssen und ohne dass eine Gefahr für die Umwelt besteht.

Die Erfindung zielt nun darauf ab, ein Heißextraktionspapier zur Verfügung zu stellen, welches für die Herstellung von Kapseln für Kaffeemaschinen geeignet ist und welches weiterhin auch unbedenklich für die Zubereitung von Heißgetränken eingesetzt werden kann.

Zur Lösung dieser Aufgabe ist das erfindungsgemäße Heißextraktionspapier im Wesentlichen dadurch gekennzeichnet, dass das Papier Zellstoff mit Faserlängen von wenigstens 2,0 mm im längengewichtetem Mittel, insbesondere wenigstens 2,5 mm im längengewichtetem Mittel enthält und dass es isotrope Dehnungseigenschaften aufweist, welche in Maschinenrichtung und Querrichtung im Wesentlichen gleich groß sind und wenigstens 7,5 %, insbesondere wenigstens 8,5 % betragen. Indem Papier gewählt wird, welches Zellstoff mit Faserlängen von wenigstens 2,0 mm im längengewichtetem Mittel, insbesondere wenigstens 2,5 mm im längengewichtetem Mittel enthält, gelingt es ein Papier herzustellen, dessen Zugfestigkeit bzw. Berstfestigkeit im Vergleich zu herkömmlichen Papieren, insbesondere Kraftpapieren, deutlich erhöht ist. Indem weiterhin das Heißextraktionspapier isotrope Dehnungseigenschaften aufweist, welche in Maschinenrichtung und Querrichtung im Wesentlichen gleich groß sind und wenigstens 7,5 %, insbesondere wenigstens 8,5 % betragen, kann ein derartiges Papier beliebt geformt oder auch gedehnt werden und es ist mit einem derartigen Papier möglich, die für Kapselmaschinen erforderlichen kleinen Behälterformen ohne ein Reißen bzw. Zerstören der Faserstruktur zu erreichen und somit eine auch für erhöhte Temperaturen und Druck formstabiles und haltbares Papier zur Verfügung zu stellen.

Unter Zellstoff mit Faserlängen von wenigstens 2,5 mm im längengewichteten Mittel, werden Zellstoffe verstanden, deren Faserlängen im Mittelwert 2,5 mm betragen wobei Abweichungen vom Mittelwert möglichst gering sind und vorzugsweise nicht größer als ± 0, 8 mm, vorzugsweise nicht größer als ± 0, 4 mm und besonders bevorzugt nicht größer als ± 0, 2 mm sind.

Indem ein Zellstoff mit längengewichteten Faserlängen von wenigstens 2,0 mm im längengewichtetem Mittel, insbesondere 2,5 mm im längengewichtetem Mittel eingesetzt ist, wird insbesondere ein aus Zellulosefasern bestehender Feinstoffanteil mit extrem geringer Faserlänge hintangehalten bzw. unterdrückt. Mit einem derartigen Papier gelingt es insbesondere, gleichbleibende Eigenschaften zu erreichen, welche für den Einsatz z.B. als Kaffeekapseln in Kapselmaschinen bei höheren Drücken geeignet sind, ohne dass ein Mitreißen von unerwünschten Feinstoff bzw. Ballaststoffen in das damit hergestellte Getränk zu befürchten ist. Insbesondere wenn berücksichtigt wird, dass für das Herstellen von Heißgetränken sehr detaillierte Vorschriften bestehen, welche Bestandteile ein Heißextraktionspapier aufweisen darf und insbesondere welche Mengen an Extrakt aus den Herstellungshilfsstoffen bzw. Zuschlagstoffen in dem Endprodukt enthalten sein dürfen, ist einem Fachmann unmittelbar klar, dass die Zahl der Zuschlagstoffe nicht nur aufgrund gesetzlicher Anforderungen begrenzt sein muss, sondern insbesondere gewährleistet sein muss, dass nahezu keinerlei nicht absolut erforderliche Zusätze in dem Heißextraktionspapier enthalten sind und insbesondere auch gewährleistet ist, dass keinerlei aus der Zellulose selbst stammende Verunreinigungen in das damit hergestellte Getränk mitgerissen werden können.

Insbesondere die Tatsache, dass es gelingt mit einer modernen, schnelllaufenden Papiermaschine, welche Maschinengeschwindigkeiten von bis zu 1000 m/min aufweist, ein Heißextraktionspapier herzustellen, bei welchem auf den Zusatz von Herstellungshilfsstoffen, wie Entschäumer, Ablagerungsbekämpfungsmittel, Stärke, Fixiermittel, Leimungsmittel, Füllstoffe oder dgl. verzichtet wird, war nicht vorhersehbar, da erst durch Zugabe von derartigen Herstellungshilfsstoffen die Maschinengeschwindigkeit erhöht werden konnte.

Entsprechend der Erfindung das Heißextraktionspapier daher dahingehend weitergebildet, dass während seiner Herstellung als pH-Wert Einstellmittel lediglich anorganische Säuren und Basen, wie Schwefelsäure (H₂SO₄) und Natronlauge (NaOH) verwendet werden. Hierbei ist es wichtig, dass insbesondere der Chloridgehalt niedrig gehalten wird, um das Einbringen von leicht löslichem Chlorid mittels des heißen Wassers in das Endprodukt während der Extraktionen zu vermeiden. Ebenfalls begrenzt werden muss der Stickstoffgehalt im Wasserextrakt, da eine erhöhter Stickstoffgehalt den Geschmack des mit dem Heißextraktionspapier hergestellten Getränks oder dgl. verändern könnte. Vorzugsweise wird daher der Stickstoffgehalt im Wasserextrakt auf < 0,015 mg/g Trockenmaterial begrenzt.

Gemäß einer Weiterbildung der Erfindung ist der Zellstoff aus Zellstoff von Nadelhölzern, gewählt aus der Gruppe Tanne, Fichte, Kiefer, Lärche und Douglasie gewählt. Nadelhölzer haben bekanntermaßen hohe Faserlängen und werden insbesondere für die Herstellung von Papieren, welche eine hohe Zugfestigkeit besitzen müssen, üblicherweise eingesetzt. Gemäß der Erfindung wird versucht, einen Zellstoff zu wählen, welcher nicht nur längengewichtet ist, sondern bevorzugt auch aus ein und derselben Holzart oder Mischungen von zwei definierten Holzarten, wie z.B. Mischungen aus Fichte und Kiefer stammt.

Gemäß einer Weiterbildung der Erfindung ist der Zellstoff für das Heißextraktionspapier derart gewählt, dass bis zu 15 %, vorzugsweise bis zu 10 % des Zellstoffs aus Nadelhölzern durch Zellstoff aus Laubhölzern, gewählt aus der Gruppe Buche, Eiche, Aspe, Pappel, Akazie, Erle, Ahorn, Kastanie, Tupelo, Platane, Linde und Eukalyptus oder Mischungen aus zwei oder mehreren davon ersetzt sind. Um die Eigenschaften des Heißextraktionspapiers im Wesentlichen unverändert aufrecht zu erhalten können bis zu 15 %, insbesondere bis zu 10 % des Zellstoffs durch Zellstoff aus Laubhölzern, welcher eine geringere Faserlänge als jener aus Nadelhölzern aufweist durch Zellstoff aus Nadelhölzern ersetzt sein. Trotz dieses Ersatzes gelingt es gemäß der Erfindung insbesondere die Bruchdehnungseigenschaften des Heißextraktionspapiers aufrecht zu erhalten.

Gemäß einer Weiterbildung der Erfindung sind die isotropen Dehnungseigenschaften des Papiers derart gewählt, dass die Bruchdehnung in Maschinenrichtung (MD) maximal um 1,5 % von jener in Querrichtung (CD) abweicht. Mit einem derartigen isotropen Dehnungsverhalten kann sichergestellt werden, dass auch bei Formen von beispielsweise Kapseln aus derartigen Papieren eine unerwünschte Schwächung und somit Veränderung der Materialeigenschaften in einer Richtung mit Sicherheit hintangehalten wird.

Ein derartiges Heißextraktionspapier gemäß der Erfindung kann, wie dies einer Weiterbildung entspricht, Flächengewichte zwischen 70 und 250 g/m² aufweisen. Hierbei wird das Flächengewicht je nach bei der Extraktion anzuwendendem Druck bzw. Dauer der Anwendung gewählt und liegt häufig im Bereich von etwa 80 - 150 g/m².

Um mit Sicherheit für sämtliche Anforderung für eine Extraktion von Nahrungs- bzw. Genussmitteln geeignet zu sein, ist gemäß einer Weiterbildung der Erfindung das Heißextraktionspapier so gewählt, dass ein Chloridgehalt eines Heißwasserextrakts aus dem Heißextraktionspapier unter 0,7 mg/l und ein Aluminiumgehalt eines Heißwasserextrakts aus dem Heißextraktionspapier unter 0,1 mg/l liegt. Insbesondere die Absenkung des aus Hilfsmitteln stammenden Aluminiumgehalts ebenso wie der geringe Chloridgehalt ermöglichen einen Einsatz des Heißextraktionspapiers auf dem Gebiet der Nahrungs- und Genussmittel.

Um mit Sicherheit hintanzuhalten, das das Heißextraktionspapier während der Anwendung von heißem Wasser bzw. Dampf und Druck reißt bzw. derartig beansprucht wird, dass zu viel Material mitgerissen wird oder die Dichtheit desselben nicht mehr gegeben ist, ist die Erfindung dahingehend weitergebildet, dadurch gekennzeichnet, dass es einen Berstwiderstand von wenigstens 630 kPa/100 g.m⁻², 790 kPa/130 g.m⁻² bzw. 1020 kPa/180 g.m⁻² aufweist. Wenn, wie dies gemäß der Erfindung möglich ist das Heißextraktionspapier einen Laubholzanteil aufweist, sinkt die Berstfestigkeit in Abhängigkeit von der Menge und der Art des beigemischten Laubholzes, ohne dass jedoch die anderen Eigenschaften maßgeblich beeinflusst werde. Gemäß einer Weiterbildung der Erfindung weist ein derartiges Heißextraktionspapier das einen Laubholzanteil aufweisende Heißextraktionspapier einen Berstwiderstand von wenigstens 400 kPa/100 g.m⁻², 520 kPa/130 g.m⁻² bzw. 630 kPa/180 g.m⁻² auf.

Um insbesondere die gewünschte Kreppung eines derartigen Papiers mit Sicherheit aufrecht zu erhalten bzw. zu erreichen, ist das Heißextraktionspapier dahingehend weitergebildet, dass es gestaucht und gegebenenfalls zusätzlich kalandriert ist, insbesondere in einer Clupak-Anlage ge-staucht und in einem Kalander, insbesondere Schuhkalander kalandriert ist. Die Stauchung des Heißextraktionspapiers in der Clupak-Anlage, in welcher in an sich bekannter Weise das Papier zwischen einem Gummituch und einem Zylinder gestaucht wird, wird bei dem Heißextraktionspapier gemäß der Erfindung die Geschwindigkeit in der Vortrockenpartie anders als jene in der Nachtrockenpartie gewählt, wobei die Geschwindigkeit in der Vortrockenpartie größer als jene in der Nachtrockenpartie gewählt wird. Bezüglich des isotropen Dehnverhaltens des Heißextraktionspapiers gemäß der Erfindung wird hierbei eine Dehnfähigkeit von etwa 2 % in Maschinenrichtung durch die eingesetzten Zellstoffe erreicht. Zusätzliche Dehnungswerte in Maschinenrichtung werden ausschließlich durch die spezifische Fahrweise der Clupak-Anlage erreicht. So gelingt es in der Maschinenrichtung in der Vortrocknungsphase mit der Clupak-Anlage das zusätzliche Erreichen von wenigstens 5,5 % zusätzlich zu der Dehnung der Faser, wenn die Maschine mit einer Geschwindigkeit von 850 m/min in der Vortrocknungsphase und von 803 m/min in der Nachtrocknungsphase gefahren wird. Die Dehnung in Querrichtung wird gemäß der Erfindung durch eine Hochkonsistenzmahlung erreicht, in welcher der Zellstoffbrei mit einer Konsistenz von wenigstens 25 % Feststoffen einer mechanischen Behandlung in einem Mahlspalt einer mechanischen Behandlung unterworfen wird.

Der fakultative Schritt des Kalanders, insbesondere mittels eines Schuhkalanders erlaubt eine Glättung der zuvor gekreppten Oberfläche des Heißextraktionspapiers ohne dass gleichzeitig die Berstfestigkeit oder die Zugfestigkeit nachteilig beeinflusst würden. Die Wahl einer Schuhlänge von beispielsweise 50 bis 170 mm im Schuhkalander, Nipdrücke von bis zu 10 MPa, eine Oberflächentemperatur der Kalanderwalze von bis zu 280 °C sowie applizierte Dampfmengen von bis zu 3 g/m², die knapp vor dem Kalanderspalt aufgebracht werden, wirken sich positiv auf das erwünschte Glättungsverhalten aus.

Gemäß einer Weiterbildung der Erfindung wird ein sulfatgekochter ungebleichter Zellstoff für das Heißextraktionspapier eingesetzt. Indem ungebleichter Zellstoff eingesetzt wird, wird der Einsatz von ansonsten nötigen Bleichmitteln vermieden, was insgesamt die Eignung des Heißextraktionspapiers als Kapsel in einer Kapselkaffeemaschine deutlich verbessert.

Schließlich kann, um beispielsweise eine Wasseraufnahme eines derartigen Heißextraktionspapiers und somit ein Feuchtwerden des darin enthaltenen Produkts mit Sicherheit hintanzuhalten und/oder einen entsprechenden Aromaschutz zu gewährleisten die Erfindung dahingehend weitergebildet sein, dass das Papier beschichtet ausgebildet ist. Um sicherzustellen, dass wenigstens eine gegebenenfalls auf das Heißextraktionspapier aufzubringende Beschichtung auf dem Heißextraktionspapier gemäß der Erfindung gut haftet und nicht unbeabsichtigt abgelöst wird, wird gemäß einer Weiterbildung der Erfindung die Oberflächenenergie des Papiers auf > 33 mJ/m², bevorzugt > 35 mJ/m², besonders bevorzugt > 38 mJ/m² eingestellt. Die Oberflächenenergie wird hier als Summe aus polaren und dispersiven Anteilen in dem Papier sowie in oberflächennahen Schichten des Papiers verstanden. Der Unterschied zwischen der Oberseite und der Siebseite des Papiers hinsichtlich der Oberflächenenergien beträgt bevorzugt 3 mJ/m², besonders bevorzugt 2 mJ/m². Dadurch kann sichergestellt werden, dass beide Seiten des Papiers sich im Falle einer aufzubringenden Beschichtung gleichwertig verhalten und die Beschichtungen nicht z.B. einseitig unbeabsichtigt abgelöst werden. Die Oberflächenenergie des Heißextraktionspapiers resultiert aus den verwendeten Zellstoffen und den unbedingt erforderlichen Fabrikationshilfsmitteln auf der Papiermaschine. Ihre Einstellung ist somit z.B. durch Wahl des Zellstoffs möglich.

Eine Beschichtung des Heißextraktionspapiers kann zum Beispiel durch eines der folgenden Verfahren gewählt aus Laminieren, Kaschieren oder Extrusionsbeschichten oder -kaschieren erfolgen. Bei den für die Ausbildung von derartigen Beschichtungen einzusetzenden Beschichtungsmaterialien handelt es sich hauptsächlich Kunststoffe, die den lebensmittelrecht- lichen Anforderungen für die Heißextraktion genügen, da auch der Gesamtverbund aus Heißextraktionspapier und Beschichtung(en) diesen entsprechen muss. Besonders bevorzugt sind Kunststoffe, welche auch biologisch abbaubar bzw. kompostierfähig sind, wie z.B. Polymilchsäure oder Polyvinylalkohole Es können aber auch andere jeweils entsprechende Materialien verwendet werden, wie z.B. Polyethylen oder Polypropylen. Es können eine oder beide Seiten des Heißextraktionspapiers beschichtet werden und je Papierseite kann eine unterschiedliche Anzahl und Art an Kunststoffen bzw. Materialien für die Beschichtung verwendet werden. Entsprechende Schichtdicken sind den jeweiligen Materialien und weiteren gewünschten Barriereeigenschaften anzupassen und betragen zwischen 5 und 25 µm, insbesondere 7 bis 20 µm pro Schicht und sind insgesamt nicht dicker als etwa 50 µm.

Es erübrigt sich festzuhalten, dass das Heißextraktionspapier gebleicht oder vorzugsweise ungebleicht eingesetzt werden kann.

Bevorzugt kann das Heißextraktionspapier in einem Verfahren zur Herstellung von verschlossenen Kapseln zur Tee und/oder Kaffeezubereitung verwendet werden. Aufgrund seiner isotropen Dehnungseigenschaften kann bei einer derartigen Verwendung ein unbeabsichtigtes Reißen des Papiers während des Formens und während der Verwendung hintangehalten werden.

Die Erfindung wird nachfolgend anhand von Ausführungsbeispielen näher erläutert. Bezüglich der für die Beschreibung der Eigenschaften der hergestellten Produkte verwendeten Messgrößen ist festzuhalten, dass für folgende Normen für ihre Messung bzw. Bestimmung herangezogen wurden und dass diese nachfolgend nicht mehr gesondert angeführt werden:

| | |
|---|---|
| Faserlänge | ISO 16065-2:20014 |
| Berstfestigkeit | ISO 2758:2014 |
| Dehnung | ISO 1924-3:2005 |
| Grammatur | ISO 536:2012 |
| Luftdurchlässigkeit nach Gurley | ISO 5636-5:2013 |
| Heißwasserextrakt | ISO 6588-2:2012 |

### Beispiel 1

### Herstellung eines ersten Heißextraktionspapiers gemäß der Erfindung

Ungebleichter Kraftsulfatzellstoff der ausschließlich aus 80 % bis 81% Fichten und 19 % bis 20 % Kieferholz mit einer Kappa-Zahl von 45 hergestellt wurde, wurde zur Herstellung des Heißextraktionspapiers eingesetzt. Auf einer Sackpapiermaschine, die pseudo-neutral gefahren wird und mit einer maximalen Geschwindigkeit von > 1000 m/min, und die insbesondere zur Herstellung des Heißextraktionspapiers mit etwa 504 m/min betrieben wurde, wurde zur Absenkung und Einstellung des pH-Wertes ausschließlich 98 %ige Schwefelsäure verwendet. Das anfallende Siebwasser hat einen pH-Wert von 6,2 bis etwa 7,5. Chemikalien, die üblicherweise bei der Papierherstellung eingesetzt werden wie Alaun, Stärke, Ablagerungsbekämpfungsmittel, Entschäumer, Talkum oder Leimungsmittel dürfen nicht eingesetzt werden, und die entsprechenden Zuschlagsöffnungen der Anlage werden wenigstens eine Stunde vor Beginn der Herstellung des Heißextraktionspapiers geschlossen, um jegliche Restmengen dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des Heißextraktionspapiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass dem Faserbrei kein Eigenausschuss, kein Trockenausschuss und keine Randstreifen während der Produktion des Heißextraktionspapiers wieder zugeführt werden. Diese Ströme werden während der Produktion in einen sogenannten Zwischenbehälter geleitet.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30 % und 35 % eingestellt und im Falle der Niederkonsistenzmahlung zwischen 4 % und 6 % eingestellt wird. Weiterhin wird bei einer Hochkonsistenzmahlung die Dehnung in Querrichtung und die Niederkonsistenzmahlung entsprechend des Erreichens der Porosität (Gurley) > 16 s gesteuert. Im angeführten Ausführungsbeispiel liegen die spezifischen Mahlbelastungen in der Hochkonsistenzmahlung zwischen 220-240 kWh/t und in der Niederkonsistenzmahlung 120-145 kWh/t.

Zum Bedampfen des Heißextraktionspapiers wird ein herkömmlicher Dampfblaskasten, der Dampf mit einem Druck von wenigstens 2,0 bar und einer Temperatur von 152 °C auf das Papier aufbringt, verwendet. Ebenso wird eine Hochdruckhaube verwendet.

Die Papiermaschine ist mit einem Langsieb, insbesondere einer Foudrinier-Siebpartie versehen. Das Heißextraktionspapier wird in einer Pressenpartie mit zwei konventionellen Nips und einer Schuhpresse mit einem Druck im 1. Nip von 60 kN/m, im 2. Nip von 90 kN/m und in der Schuhpresse mit einem Druck von 500 kN/m gepresst. Die Filzkonditionierung für die Pressenpartie wird mittels Rohrsauger und Hochdruck-Spritzrohren durchgeführt. Die Rohrsauger-Vakuen werden zwischen 1,5 und 2 mWs und die Hochdruck-Spritzrohre mit 15 bar betrieben.

Die Trocknung des Heißextraktionspapiers erfolgt in einer Trockenpartie mit Slalomtrocknung, Kontakttrocknung und Konvektionstrocknung mit Heißlufteinsatz von wenigstens 170 °C, bei welcher das freie Schrumpfen des Papiers erlaubt wird.

Die Trocknung erfolgt so lange bis ein Zielwert von 7% Restfeuchte erreicht ist.

Das so hergestellte Heißextraktionspapier hatte eine
Luftdurchlässigkeit (Gurley) von 19,8 s
eine Berstfestigkeit von 824 kPa/134 g.m⁻²
ein Flächengewicht von 134 g/m² und
eine Bruchdehnung von 9,29 % in Maschinenrichtung und 7,93 % in Querrichtung.

Zur Überprüfung der Eigenschaften wurden 2 g des Papiers einer Heißextraktion durch Kochen unter Rückfluss mit 100 ml Wasser für 1 Stunde hergestellt entsprechend der Norm: ISO 6588-2:2012

Das Fasermaterial wurde abfiltriert und im Filtrat wurden Chlorid und Aluminium-Ionen bestimmt. Es zeigte sich, dass ein Chlorid-Gehalt von 0,63 mg/l und ein Aluminium-Gehalt von 0,077 mg/l erreicht werden konnte.

### Beispiel 2

### Herstellung eines zweiten Heißextraktionspapiers gemäß der Erfindung

Ungebleichter Kraftsulfatzellstoff der ausschließlich aus 77 % bis 79% Fichten und 21 % bis 23 % Kieferholz mit einer Kappa-Zahl von 40 hergestellt wurde, wurde zur Herstellung des Heißextraktionspapiers eingesetzt. Auf einer Sackpapiermaschine, die pseudo-neutral gefahren wird und eine maximale Geschwindigkeit von > 1000 m/min, insbesondere etwa und die insbesondere zur Herstellung des Heißextraktionspapiers mit etwa 523 m/min betrieben wurde, wurde zur Absenkung und Einstellung des pH-Wertes ausschließlich 98 %ige Schwefelsäure verwendet. Das anfallende Siebwasser hat einen pH-Wert von 6,2 bis etwa 7,5. Chemikalien, die üblicherweise bei der Papierherstellung eingesetzt werden wie Alaun, Stärke, Ablagerungsbekämpfungsmittel, Entschäumer, Talkum oder Leimungsmittel dürfen nicht eingesetzt werden, und die entsprechenden Zuschlagsöffnungen der Anlage werden wenigstens eine Stunde vor Beginn der Herstellung des Trockenextraktionspapiers geschlossen, um jegliche Restmenge dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des Heißextraktionspapiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass kein Eigenausschuss, kein Trockenausschuss und keine Randstreifen während der Produktion des Heißextraktionspapiers dem Faserbrei wieder zugeführt werden. Diese Ströme werden während der Produktion in einen sogenannten Zwischenbehälter gestellt.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30 % und 35% eingestellt und im Falle der Niederkonsistenzmahlung zwischen 4 % und 6 % eingestellt wird. Weiterhin wird bei einer Hochkonsistenzmahlung die Dehnung in Querrichtung und die Niederkonsistenzmahlung entsprechend des Erreichens der Porosität (Gurley) > 16 s gesteuert. Im angeführten Ausführungsbeispiel liegen die spezifischen Mahlbelastungen in der Hochkonsistenzmahlung zwischen 210 und 230 kWh/t und in der Niederkonsistenzmahlung 110 und 135 kWh/t.

Zum Bedampfen des Heißextraktionspapiers wird ein herkömmlicher Dampfblaskasten, der Dampf mit einem Druck von wenigstens 2,0 bar und einer Temperatur von 152 °C auf das Papier aufbringt. Ebenso wird eine Hochdruckhaube verwendet.

Die Papiermaschine ist mit einem Langsieb, insbesondere einer Foudrinier-Siebpartie versehen. Das Heißextraktionspapier wird in einer Pressenpartie mit zwei konventionellen Nips und einer Schuhpresse mit einem Druck im 1. Nip von 60 kN/m, im 2. Nip von 90 kN/m und in der Schuhpresse mit einem Druck von 500 kN/m gepresst. Die Filzkonditionierung für die Pressenpartie wird mittels Rohrsauger und Hochdruck-Spritzrohre durchgeführt. Die Rohrsauger-Vakuen werden zwischen 1,5 und 2 mWs und die Hochdruck-Spritzrohre mit 15 bar betrieben.

Die Trocknung des Heißextraktionspapiers erfolgt in einer Trockenpartie mit Slalomtrocknung, Kontakttrocknung und Konvektionstrocknung mit Heißlufteinsatz von wenigstens 170 °C, im vorliegenden Fall von durchschnittlich 180 °C bei welcher das freie Schrumpfen des Papiers erlaubt wird.

Die Trocknung erfolgt bis ein Zielwert von 7% Restfeuchte erreicht ist.

Das so hergestellte Heißextraktionspapier hatte eine
Luftdurchlässigkeit (Gurley) von 21,3 s
eine Berstfestigkeit von 788 kPa/129g.m⁻²
ein Flächengewicht von 129 g/m² und
eine Bruchdehnung von 8,92 % in Maschinenrichtung und 8,16 % in Querrichtung.

Zur Überprüfung der Eigenschaften wurden 2 g des Papiers einer Heißextraktion durch Kochen unter Rückfluss mit 100 ml Wasser für 1h hergestellt entsprechend der Norm: ISO 6588-2:2012

Das Fasermaterial wurde abfiltriert und im Filtrat wurden Chlorid und Aluminium-Ionen bestimmt. Es zeigte sich, dass ein Chlorid-Gehalt von 0,52 mg/l und ein Aluminium-Gehalt von 0,065 mg/l erreicht werden konnte.

### Beispiel 3

### Herstellung eines dritten Heißextraktionspapiers gemäß der Erfindung

Ungebleichter Kraftsulfatzellstoff der ausschließlich aus 78 % bis 80% Fichten und 20% bis 22% Kiefernholz mit einer Kappa-Zahl von 40 hergestellt wurde, wurde zur Herstellung des Heißextraktionspapiers eingesetzt. Auf einer Sackpapiermaschine, die pseudo-neutral gefahren wird und eine maximale Geschwindigkeit von > 1000 m/min, insbesondere etwa 670 m/min aufweist, wurde zur Absenkung und Einstellung des pH-Wertes ausschließlich 98 %ige Schwefelsäure verwendet. Das anfallende Siebwasser hat einen pH-Wert von 6,2 bis etwa 7,5. Chemikalien, die üblicherweise bei der Papierherstellung eingesetzt werden wie Alaun, Stärke, Ablagerungsbekämpfungsmittel, Entschäumer, Talkum oder Leimungsmittel dürfen nicht eingesetzt werden, und die entsprechenden Zuschlagsöffnungen der Anlage werden wenigstens eine Stunde vor Beginn der Herstellung des Trockenextraktionspapiers geschlossen, um jegliche Restmenge dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des Heißextraktionspapiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass kein Eigenausschuss, kein Trockenausschuss und keine Randstreifen während der Produktion des Heißextraktionspapiers dem Faserbrei wieder zugeführt werden. Diese Ströme werden während der Produktion in einen sogenannten Zwischenbehälter gestellt.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30-35% eingestellt und im Falle der Niederkonsistenzmahlung zwischen 4-6 % eingestellt wird. Weiterhin wird bei einer Hochkonsistenzmahlung die Dehnung in Querrichtung und die Niederkonsistenzmahlung entsprechend des Erreichens der Porosität (Gurley) > 16 s gesteuert. Im angeführten Ausführungsbeispiel liegen die spezifischen Mahlbelastungen in der Hochkonsistenzmahlung zwischen 200 bis 220 kWh/t und in der Niederkonsistenzmahlung 120 bis 145 kWh/t.

Zum Bedampfen des Heißextraktionspapiers wird ein herkömmlicher Dampfblaskasten, der Dampf mit einem Druck von wenigstens 2,0 bar und einer Temperatur von 152 °C auf das Papier aufbringt. Ebenso wird eine Hochdruckhaube verwendet.

Die Papiermaschine ist mit einem Langsieb, insbesondere einer Foudrinier-Siebpartie versehen. Das Heißextraktionspapier wird in einer Pressenpartie mit zwei konventionellen Nips und einer Schuhpresse mit einem Druck im 1. Nip von 60 kN/m, im 2. Nip von 90 kN/m und in der Schuhpresse mit einem Druck von 550 kN/m gepresst. Die Filzkonditionierung für die Pressenpartie wird mittels Rohrsauger und Hochdruck-Spritzrohre durchgeführt. Die Rohrsauger-Vakuen werden zwischen 1,5 und 2 mWs und die Hochdruck-Spritzrohre mit 15 bar betrieben.

Die Trocknung des Heißextraktionspapiers erfolgt in einer Trockenpartie mit Slalomtrocknung, Kontakttrocknung und Konvektionstrocknung mit Heißlufteinsatz von wenigstens 175 °C, bei welcher das freie Schrumpfen des Papiers erlaubt wird.

Die Trocknung erfolgt bis ein Zielwert von 7 % Restfeuchte erreicht ist.

Das so hergestellte Heißextraktionspapier hatte eine
Luftdurchlässigkeit (Gurley) von 20,3 s
einen Berstfestigkeit von 671 kPa/102g.m⁻²
ein Flächengewicht von 102 g/m² und
eine Bruchdehnung von 9,12 % in Maschinenrichtung und 8,21 % in Querrichtung.

Zur Überprüfung der Eigenschaften wurden 2 g des Papiers einer Heißextraktion durch Kochen unter Rückfluss mit 100 ml Wasser für 1h hergestellt entsprechend der Norm: ISO 6588-2:2012 Das Fasermaterial wurde abfiltriert und im Filtrat wurden Chlorid und Aluminium-Ionen bestimmt. Es zeigte sich, dass ein Chlorid-Gehalt von 0,56 mg/l und ein Aluminium-Gehalt von 0,059 mg/l erreicht werden konnte.

### Beispiel 4

### Herstellung eines vierten Heißextraktionspapiers gemäß der Erfindung

Gebleichter Kraftsulfatzellstoff der aus 61 % bis 65 % Fichten und 25 % bis 29 % Kieferholz und 10 % Birke mit einer Kappa-Zahl von <5 hergestellt wurde, wurde zur Herstellung des Heißextraktionspapiers eingesetzt. Auf einer Sackpapiermaschine, die pseudo-neutral gefahren wird und eine maximale Geschwindigkeit von > 1000 m/min, insbesondere etwa 560 m/min aufweist, wurde zur Absenkung und Einstellung des pH-Wertes ausschließlich 98 %ige Schwefelsäure verwendet. Das anfallende Siebwasser hat einen pH-Wert von 6,2 bis etwa 7,5. Chemikalien, die üblicherweise bei der Papierherstellung eingesetzt werden wie Alaun, Stärke, Ablagerungsbekämpfungsmittel, Entschäumer, Talkum oder Leimungsmittel dürfen nicht eingesetzt werden, und die entsprechenden Zuschlagsöffnungen der Anlage werden wenigstens eine Stunde vor Beginn der Herstellung des Trockenextraktionspapiers geschlossen, um jegliche Restmenge dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des Heißextraktionspapiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass kein Eigenausschuss, kein Trockenausschuss und keine Randstreifen während der Produktion des Heißextraktionspapiers dem Faserbrei wieder zugeführt werden. Diese Ströme werden während der Produktion in einen sogenannten Zwischenbehälter gestellt.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30-35% eingestellt und im Falle der Niederkonsistenzmahlung zwischen 4-6 % eingestellt wird. Weiterhin wird bei einer Hochkonsistenzmahlung die Dehnung in Querrichtung und die Niederkonsistenzmahlung entsprechend des Erreichens der Porosität (Gurley) > 16 s gesteuert. Im angeführten Ausführungsbeispiel liegen die spezifischen Mahlbelastungen in der Hochkonsistenzmahlung zwischen 140 bis 170 kWh/to und in der Niederkonsistenzmahlung 60 bis 80 kWh/to.

Zum Bedampfen des Heißextraktionspapiers wird ein herkömmlicher Dampfblaskasten, der Dampf mit einem Druck von wenigstens 2,0 bar und einer Temperatur von 152 °C auf das Papier aufbringt. Ebenso wird eine Hochdruckhaube verwendet.

Die Papiermaschine ist mit einem Langsieb, insbesondere einer Foudrinier-Siebpartie versehen. Das Heißextraktionspapier wird in einer Pressenpartie mit zwei konventionellen Nips und einer Schuhpresse mit einem Druck im 1. Nip von 60 kN/m, im 2. Nip von 90 kN/m und in der Schuhpresse mit einem Druck von 550 kN/m gepresst. Die Filzkonditionierung für die Pressenpartie wird mittels Rohrsauger und Hochdruck-Spritzrohre durchgeführt. Die Rohrsauger-Vakuen werden zwischen 1,5 und 2 mWs und die Hochdruck-Spritzrohre mit 15 bar betrieben.

Die Trocknung des Heißextraktionspapiers erfolgt in einer Trockenpartie mit Slalomtrocknung, Kontakttrocknung und Konvektionstrocknung mit Heißlufteinsatz von wenigstens 175 °C, bei welcher das freie Schrumpfen des Papiers erlaubt wird.

Die Trocknung erfolgt bis ein Zielwert von 7 % Restfeuchte erreicht ist.

Das so hergestellte Heißextraktionspapier hatte eine
Luftdurchlässigkeit (Gurley) von 22,1 s
eine Berstfestigkeit von 604 kPa/131g.m⁻²
ein Flächengewicht von 131 g/m² und
eine Bruchdehnung von 9,16 % in Maschinenrichtung und 9,48 % in Querrichtung.

Zur Überprüfung der Eigenschaften wurden 2 g des Papiers einer Heißextraktion durch Kochen unter Rückfluss mit 100 ml Wasser für 1 Stunde hergestellt entsprechend der Norm: ISO 6588-2:2012

Das Fasermaterial wurde abfiltriert und im Filtrat wurden Chlorid und Aluminium-Ionen bestimmt. Es zeigte sich, dass ein Chlorid-Gehalt von 0,55 mg/l und ein Aluminium-Gehalt von 0,074 mg/l erreicht werden konnte.

### Beispiel 5

### Herstellung eines fünften Heißextraktionspapiers gemäß der Erfindung

Gebleichter Kraftsulfatzellstoff der aus 61 % bis 65 % Fichten und 25 % bis 29 % Kieferholz und 10 % Birke mit einer Kappa-Zahl von <5 hergestellt wurde, wurde zur Herstellung des Heißextraktionspapiers eingesetzt. Auf einer Sackpapiermaschine, die pseudo-neutral gefahren wird und eine maximale Geschwindigkeit von > 1000 m/min, insbesondere etwa 960 m/min aufweist, wurde zur Absenkung und Einstellung des pH-Wertes ausschließlich 98 %ige Schwefelsäure verwendet. Das anfallende Siebwasser hat einen pH-Wert von 6,2 bis etwa 7,5. Chemikalien, die üblicherweise bei der Papierherstellung eingesetzt werden wie Alaun, Stärke, Ablagerungsbekämpfungsmittel, Entschäumer, Talkum oder Leimungsmittel dürfen nicht eingesetzt werden, und die entsprechenden Zuschlagsöffnungen der Anlage werden wenigstens eine Stunde vor Beginn der Herstellung des Trockenextraktionspapiers geschlossen, um jegliche Restmenge dieser Materialien im herzustellenden Papier sicher hintanzuhalten. Ebenso werden Faserfangstoffe zu einer anderen Papiermaschine oder zu anderen Ausschussbehältern verschoben, um eine Verunreinigung des Heißextraktionspapiers mit Fasern kurzer Länge zu vermeiden. Diese Umschaltung wird bereits mehrere Stunden, vorzugsweise etwa 3 Stunden vor Produktionsbeginn vorgenommen. Die Papiermaschine wird hierbei so gefahren, dass kein Eigenausschuss, kein Trockenausschuss und keine Randstreifen während der Produktion des Heißextraktionspapiers dem Faserbrei wieder zugeführt werden. Diese Ströme werden während der Produktion in einen sogenannten Zwischenbehälter gestellt.

Das Ausgangsmaterial wird einer Hochkonsistenzmahlung und anschließend einer Niederkonsistenzmahlung unterworfen, wobei im Falle der Hochkonsistenzmahlung die Stoffdichte zwischen 30 - 35% eingestellt und im Falle der Niederkonsistenzmahlung zwischen 4 - 6 % eingestellt wird. Weiterhin wird bei einer Hochkonsistenzmahlung die Dehnung in Querrichtung und die Niederkonsistenzmahlung entsprechend des Erreichens der Porosität (Gurley) > 16 s gesteuert. Im angeführten Ausführungsbeispiel liegen die spezifischen Mahlbelastungen in der Hochkonsistenzmahlung zwischen 100 bis 120 kWh/to und in der Niederkonsistenzmahlung 110 bis 130 kWh/to.

Zum Bedampfen des Heißextraktionspapiers wird ein herkömmlicher Dampfblaskasten, der Dampf mit einem Druck von wenigstens 2,0 bar und einer Temperatur von 152 °C auf das Papier aufbringt. Ebenso wird eine Hochdruckhaube verwendet.

Die Papiermaschine ist mit einem Langsieb, insbesondere einer Foudrinier-Siebpartie versehen. Das Heißextraktionspapier wird in einer Pressenpartie mit zwei konventionellen Nips und einer Schuhpresse mit einem Druck im 1. Nip von 60 kN/m, im 2. Nip von 90 kN/m und in der Schuhpresse mit einem Druck von 550 kN/m gepresst. Die Filzkonditionierung für die Pressenpartie wird mittels Rohrsauger und Hochdruck-Spritzrohre durchgeführt. Die Rohrsauger-Vakuen werden zwischen 1,5 und 2 mWs und die Hochdruck-Spritzrohre mit 15 bar betrieben.

Die Trocknung des Heißextraktionspapiers erfolgt in einer Trockenpartie mit Slalomtrocknung, Kontakttrocknung und Konvektionstrocknung mit Heißlufteinsatz wenigstens 175 °C, bei welcher das freie Schrumpfen des Papiers erlaubt wird.

Die Trocknung erfolgt bis ein Zielwert von 7 % Restfeuchte erreicht ist.

Das so hergestellte Heißextraktionspapier hatte eine
Luftdurchlässigkeit (Gurley) von 20,1 s
eine Berstfestigkeit von 327 kPa/71 g.m⁻²
ein Flächengewicht von 71 g/m² und
eine Bruchdehnung von 9,03 % in Maschinenrichtung und 9,51 % in Querrichtung.

Zur Überprüfung der Eigenschaften wurden 2 g des Papiers einer Heißextraktion durch Kochen unter Rückfluss mit 100 ml Wasser für 1 Stunde hergestellt entsprechend der Norm: ISO 6588-2:2012

Das Fasermaterial wurde abfiltriert und im Filtrat wurden Chlorid und Aluminium-Ionen bestimmt. Es zeigte sich, dass ein Chlorid-Gehalt von 0,52 mg/l und ein Aluminium-Gehalt von 0,069 mg/l erreicht werden konnte.

## Patentansprüche

1. Heißextraktionspapier bestehend im Wesentlichen aus Zellulose sowie aus für die Zelluloseherstellung erforderlichen Fabrikationshilfsmitteln, wie pH-Wert Einstellmittel basierend auf Säuren und/oder Basen, **dadurch gekennzeichnet, dass** das Papier ausschließlich Zellstoff mit Faserlängen von wenigstens 2,0 mm im längengewichtetem Mittel, insbesondere wenigstens 2,5 mm im längengewichtetem Mittel enthält und dass es isotrope Dehnungseigenschaften aufweist, welche in Maschinenrichtung und Querrichtung im Wesentlichen gleich groß sind und wenigstens 7,5 %, insbesondere wenigstens 8,5 % betragen.

2. Heißextraktionspapier nach Anspruch 1, **dadurch gekennzeichnet, dass** dass als pH-Wert Einstellmittel Schwefelsäure (H₂SO₄) bzw. Natronlauge (NaOH) enthalten ist.

3. Heißextraktionspapier nach Anspruch 1 oder 2, **dadurch gekennzeichnet**, der Zellstoff aus Zellstoff von Nadelhölzern, gewählt aus der Gruppe, Tanne, Fichte, Kiefer, Lärche und Douglasie oder Mischungen aus zwei oder mehreren davon gewählt ist.

4. Heißextraktionspapier nach Anspruch 3, **dadurch gekennzeichnet, dass** bis zu 15 %, vorzugsweise bis zu 10 % des Zellstoffs aus Nadelhölzern durch Zellstoff aus Laubhölzern, gewählt aus der Gruppe Buche, Eiche, Aspe, Pappel, Akazie, Erle, Ahorn, Kastanie, Tupelo, Platane, Linde und Eukalyptus oder Mischungen aus zwei oder mehreren davon ersetzt sind.

5. Heißextraktionspapier nach einem der Ansprüche 1 bis 4, **dadurch gekennzeichnet, dass** die Dehnungseigenschaften in Maschinenrichtung (MD) höchstens um 1,5 % von jenen in Querrichtung (CD) abweichen.

6. Heißextraktionspapier nach einem der Ansprüche 1 bis 5, **dadurch gekennzeichnet, dass** das Papier Flächengewichte zwischen 70 und 250 g/m² aufweist.

7. Heißextraktionspapier nach einem der Ansprüche 1 bis 6, **dadurch gekennzeichnet, dass** es eine Luftdurchlässigkeit nach Gurley zwischen 15 s und 25 s, insbesondere zwischen 20 s und 23 s aufweist.

8. Heißextraktionspapier nach einem der Ansprüche 1 bis 7, **dadurch gekennzeichnet, dass** ein Chloridgehalt eines Wasserextrakts aus dem Heißextraktionspapier unter 0,7 mg/l und ein Aluminiumgehalt eines Wasserextrakts aus dem Heißextraktionspapier unter 0,1 mg/l liegt.

9. Heißextraktionspapier nach einem der Ansprüche 1 bis 3 und 5 bis 8, **dadurch gekennzeichnet, dass** es einen Berstwiderstand von wenigstens 630 kPa/100 g.m⁻², 790 kPa/130 g.m⁻² bzw. 1020 kPa/180 g.m⁻² aufweist.

10. Heißextraktionspapier nach einem der Ansprüche 1, 2 und 4 bis 8, **dadurch gekennzeichnet, dass** das einen Laubholzanteil aufweisende Heißextraktionspapier einen Berstwiderstand von wenigstens 400 kPa/100 g.m⁻², 520 kPa/130 g.m⁻² bzw. 630 kPa/180 g.m⁻² aufweist.

11. Heißextraktionspapier nach einem der Ansprüche 1 bis 10, **dadurch gekennzeichnet, dass** das Heißextraktionspapier gestaucht und gegebenenfalls zusätzlich kalandriert, insbesondere in einer Clupak-Anlage gestaucht und in einem Kalander, insbesondere einem Schuhkalander kalandriert ist.

12. Heißextraktionspapier nach einem der Ansprüche 1 bis 11, **dadurch gekennzeichnet dass**, die Oberflächenenergie des Heißextraktionspapiers auf > 33 mJ/m², bevorzugt > 35 mJ/m², besonders bevorzugt > 38 mJ/m² eingestellt ist.

13. Verwendung des Heißextraktionspapiers gemäß einem der Ansprüche 1 bis 12 in einem Verfahren zur Herstellung von verschlossenen Kapseln zur Tee und/oder Kaffeezubereitung.

## Claims

1. Hot-extraction paper consisting substantially of cellulose and manufacturing adjuvants necessary for cellulose production, such as pH modifiers based on acids and/or bases, **characterized in that** the paper comprises exclusively cellulose having fibre lengths of at least 2.0 mm in length-weighted average, in particular of at least 2.5 mm in length-weighted average and the paper has isotropic stretching properties which are substantially equal in machine direction and cross directions and amount to at least 7.5%, in particular at least 8.5%.

2. Hot-extraction paper according to Claim 1, **characterized in that** sulphuric acid (H₂SO₄) or caustic soda (NaOH) is contained as pH modifier.

3. Hot-extraction paper according to Claim 1 or 2, **characterized in that** the cellulose is selected from cellulose from coniferous woods, selected from the group of fir, spruce, pine, larch, Douglas fir or mixtures of two or more thereof.

4. Hot-extraction paper according to Claim 3, **characterized in that** up to 15%, preferably up to 10% of the cellulose made up of coniferous woods is replaced by cellulose from deciduous woods, selected from the group of beech, oak, European aspen, poplar, acacia, alder, maple, chestnut, tupelo, plane, lime, eucalyptus or mixtures of two or more thereof.

5. Hot-extraction paper according to one of Claims 1 to 4, **characterized in that** the stretching properties in the machine direction (MD) deviate at most by 1.5% from those in the cross direction (CD).

6. Hot-extraction paper according to one of Claims 1 to 5, **characterized in that** the paper has weights per unit area of between 70 and 250 g/m².

7. Hot-extraction paper according to one of Claims 1 to 6, **characterized in that** the paper has an air permeability according to Gurley of between 15 s and 25 s, in particular between 20 s and 23 s.

8. Hot-extraction paper according to one of Claims 1 to 7, **characterized in that** a chloride content of a water extract from the hot-extraction paper is below 0.7 mg/l and an aluminium content of a water extract from the hot-extraction paper is below 0.1 mg/l.

9. Hot-extraction paper according to one of Claims 1 to 3 and 5 to 8, **characterized in that** the paper has a burst resistance of at least 630 kPa/100 g.m⁻², 790 kPa/130 g.m⁻² or 1020 kPa/180 g.m⁻².

10. Hot-extraction paper according to one of Claims 1, 2 and 4 to 8, **characterized in that** the hot-extraction paper having a deciduous wood portion has a burst resistance of at least 400 kPa/100 g.m⁻², 520 kPa/130 g.m⁻² or 630 kPa/180 g.m⁻².

11. Hot-extraction paper according to one of Claims 1 to 10, **characterized in that** the hot-extraction paper is compressed and, if appropriate additionally calendered, in particular compressed in a Clupak unit and in a calender, in particular calendered in a shoe calender.

12. Hot-extraction paper according to one of Claims 1 to 11, **characterized in that** the surface energy of the hot-extraction paper is >33 mJ/m², preferably >35 mJ/m², particularly preferably >38 mJ/m².

13. Use of the hot-extraction paper according to one of Claims 1 to 12 in a method for producing closed capsules for tea and/or coffee preparation.

## Revendications

1. Papier d'extraction à chaud constitué essentiellement de cellulose ainsi que d'adjuvants de fabrication nécessaires à la fabrication de la cellulose, tels que des agents d'ajustement du pH à base d'acides et/ou de bases, **caractérisé en ce que** le papier contient exclusivement de la pâte à papier avec des longueurs de fibres d'au moins 2,0 mm en moyenne pondérée par la longueur, en particulier d'au moins 2,5 mm en moyenne pondérée par la longueur, et qu'il présente des propriétés d'allongement isotrope, lesquelles sont sensiblement égales dans le sens machine et dans le sens transversal et s'élèvent à au moins 7,5 %, en particulier à au moins 8,5 %.

2. Papier d'extraction à chaud selon la revendication 1, **caractérisé en ce que** de l'acide sulfurique (H₂SO₄) ou de la soude caustique (NaOH) est contenu comme moyen d'ajustement du pH.

3. Papier d'extraction à chaud selon la revendication 1 ou 2, **caractérisé en ce que** la pâte à papier est choisie parmi la pâte de conifères, choisis dans le groupe du sapin, de l'épicéa, du pin, du mélèze et du douglas ou des mélanges de deux d'entre eux ou plus.

4. Papier d'extraction à chaud selon la revendication 3, **caractérisé en ce que** jusqu'à 15 %, de préférence jusqu'à 10 %, de la pâte de conifères sont remplacés par de la pâte de feuillus, choisis dans le groupe du hêtre, du chêne, du tremble, du peuplier, de l'acacia, de l'aulne, de l'érable, du châtaignier, du tupélo, du platane, du tilleul et de l'eucalyptus ou des mélanges de deux d'entre eux ou plus.

5. Papier d'extraction à chaud selon l'une quelconque des revendications 1 à 4, **caractérisé en ce que** les propriétés d'allongement dans le sens machine (MD) diffèrent au maximum de 1,5 % de celles dans le sens transversal (CD).

6. Papier d'extraction à chaud selon l'une quelconque des revendications 1 à 5, **caractérisé en ce que** le papier présente des grammages compris entre 70 et 250 g/m².

7. Papier d'extraction à chaud selon l'une quelconque des revendications 1 à 6, **caractérisé en ce qu'**il présente une perméabilité à l'air selon Gurley comprise entre 15 s et 25 s, en particulier entre 20 s et 23 s.

8. Papier d'extraction à chaud selon l'une quelconque des revendications 1 à 7, **caractérisé en ce qu'**une teneur en chlorure d'un extrait aqueux du papier d'extraction à chaud est inférieure à 0,7 mg/l et une teneur en aluminium d'un extrait aqueux du papier est inférieure à 0,1 mg/l.

9. Papier d'extraction à chaud selon l'une quelconque des revendications 1 à 3 et 5 à 8, **caractérisé en ce qu'**il présente une résistance à l'éclatement d'au moins 630 kPa/100 g.m⁻², 790 kPa/130 g.m-² et 1 020 kPa/180 g.m⁻².

10. Papier d'extraction à chaud selon l'une quelconque des revendications 1, 2 et 4 à 8, **caractérisé en ce que** le papier d'extraction à chaud présentant une proportion de bois de feuillus présente une résistance à l'éclatement d'au moins 400 kPa/100 g.m⁻², 520 kPa/130 g.m⁻² ou 630 kPa/180 g.m⁻².

11. Papier d'extraction à chaud selon l'une quelconque des revendications 1 à 10, **caractérisé en ce que** le papier d'extraction à chaud est comprimé et éventuellement en plus calandré, en particulier comprimé dans une installation clupak et calandré dans une calandre, en particulier une calandre à sabot.

12. Papier d'extraction à chaud selon l'une quelconque des revendications 1 à 11, **caractérisé en ce que** l'énergie surfacique du papier d'extraction à chaud est ajustée à > 33 mJ/m², de préférence > 35 mJ/m², de manière particulièrement préférée > 38 mJ/m².

13. Utilisation du papier d'extraction à chaud selon l'une quelconque des revendications 1 à 12 dans un procédé de fabrication de capsules scellées pour la préparation de thé et/ou de café.
